# EUROPÄISCHE PATENTANMELDUNG

(11) **EP 2 551 001 A2**
(43) Veröffentlichungstag der Anmeldung: **30.01.2013**
(21) Anmeldenummer: 12177466.5
(22) Anmeldetag: 23.07.2012
(51) Int. Cl.: B01D 1/30

(54) **Verdampfer für Prozess- und/oder Industrieabwässer sowie Vorrichtung zur Aufbereitung von Prozess- und/oder Industrieabwässern**

(30) Priorität: 27.07.2011 DE 202011103803 U
(71) Anmelder: Maier, Alexander, 76669 Bad Schönborn (DE)
(72) Erfinder: Maier, Alexander, 76669 Bad Schönborn (DE)
(74) Vertreter: Patentanwälte Ruff, Wilhelm, Beier, Dauster & Partner

(57) **Zusammenfassung**

Die Erfindung betrifft einen Verdampfer für Prozess- und/oder Industrieabwässer mit mindestens einem Steigrohr (2) und mindestens einem Fallrohr (3), wobei das wenigstens eine Steigrohr (2) mit dem wenigstens einen Fallrohr (3) über ein erstes Verbindungselement (4) in einem Bodenbereich kommuniziert ist, das wenigstens eine Steigrohr (2) mit dem wenigstens einen Fallrohr (3) über ein zweites Verbindungselement (6) verbunden ist, welches mit einem Dampfauslass (7) kommuniziert ist, sodass aus dem Abwasser ausgeschiedener Dampf abführbar ist und nicht verdampftes Abwasser über das zweite Verbindungselement (6) für eine Zirkulation zu dem Fallrohr (3) führbar ist, und eine Heizeinrichtung (5) in dem Steigrohr (2) angeordnet ist. Die Erfindung betrifft weiter eine Vorrichtung zur Aufbereitung von Prozess- und/oder Industrieabwässern mit einem Verdampfer, ein Verfahren zur Aufbereitung von Prozess- und/oder Industrieabwässern und eine Verwendung eines Verdampfers zur Aufbereitung von Prozess- und/oder Industrieabwässern.

## Beschreibung

Die Erfindung betrifft einen Verdampfer für Prozess- und/oder Industrieabwässer zur Reduzierung eines Wasseranteils in dem Prozess- und/oder Industrieabwasser. Die Erfindung betrifft weiter eine Vorrichtung zur Aufbereitung von Prozess- und/oder Industrieabwässern mit einem Verdampfer.

Prozess- und/oder Industrieabwässer, wie z.B. gebrauchte Kühlschmiermittel oder bestimmte Reinigungsabwässer, werden teilweise als gefährlicher Abfall eingestuft. Abwässer enthalten naturgemäß einen hohen Wasseranteil. Um eine kostengünstige Entsorgung zu ermöglichen, ist es bekannt, einen Wassergehalt des Abwassers durch Eindampfen zu reduzieren. Das so erhaltene Ausgangsprodukt wird als Spaltöl bezeichnet.

Aus der DE 197 01 090 A1 ist die Verwendung eines Rohrverdampfers als Verdampfer-Aggregat für verschmutzte Flüssigkeiten, beispielsweise eine Reinigungsflüssigkeit, die mit öl-, fetthaltigen oder festen metallischen oder nichtmetallischen Bearbeitungsrückständen verschmutzt ist, oder Reste von waschaktiven Substanzen enthält, bekannt. Das Verdampfer-Aggregat umfasst ein unteres und ein oberes Sammelrohr, die durch Steigrohre kleineren Durchmessers und wenigstens ein Fallrohr miteinander verbunden sind, von denen die Steigrohre beheizt sind. Das Verdampfer-Aggregat ist bis in das obere Sammelrohr mit Flüssigkeit gefüllt, wobei die Flüssigkeit in dem Verdampfer-Aggregat in Umlauf gehalten und in den Steigrohren verdampft wird, in denen eine größere Durchströmungsgeschwindigkeit erzeugt wird als in den Sammelrohren oder dem Fallrohr, und in denen eine intensive Vermischung des Dampfes und der Flüssigkeit stattfindet. Das Abwasser wird dabei über einen an dem oberen Sammelrohr oder oberhalb des oberen Sammelrohrs angeordneten Stutzen zugeführt.

Die derzeit am Markt verfügbare Technik von Eindampfeinrichtungen oder Eindampfapparaten ermöglicht es, den Wassergehalt im Ausgangsprodukt auf ca. 50 % reduzieren.

Dieses Ausgangsprodukt ist immer noch gefährlicher Abfall und muss zur Entsorgung transportiert werden und wird bei einer Entsorgung unter hohem Energieeinsatz verbrannt.

Es ist daher eine Aufgabe der vorliegenden Erfindung, einen Verdampfer sowie eine Vorrichtung und ein Verfahren zu schaffen, durch welche ein Wassergehalt effizient weiter reduziert werden kann.

Diese Aufgabe wird durch die Gegenstände mit den Merkmalen der Ansprüche 1, 10, 11 und 12 gelöst. Weitere Vorteile der Erfindung ergeben sich aus den Unteransprüchen.

Die Aufgabe wird insbesondere gelöst durch einen Verdampfer für Prozess- und/oder Industrieabwässer mit mindestens einem Steigrohr und mindestens einem Fallrohr, wobei das wenigstens eine Steigrohr mit dem wenigstens einem Fallrohr über ein erstes Verbindungselement in einem Bodenbereich kommuniziert ist, das wenigstens eine Steigrohr mit dem wenigstens einen Fallrohr über ein zweites Verbindungselement verbunden ist, sodass nicht verdampftes Abwasser für eine Zirkulation zu dem Fallrohr führbar ist, das zweite Verbindungselement mit einem Dampfauslass kommuniziert ist, sodass aus dem Abwasser ausgeschiedener Dampf abführbar ist, und eine Heizeinrichtung in dem Steigrohr angeordnet ist, mit welcher ein in dem Steigrohr vorhandenes Abwasser auf eine Temperatur oberhalb der Siedetemperatur von Wasser erhitzbar ist.

Die Aufgabe wird weiter gelöst durch eine Vorrichtung zur Aufbereitung von Prozess- und/oder Industrieabwässern mit einer ersten Eindampfeinrichtung, mittels welcher ein Abwasser zur Gewinnung von Spaltöl eindampfbar ist, und einem erfindungsgemäßen Verdampfer nach zur Entwässerung des Spaltöls.

In einem vorteilhaften Verfahren zur Aufbereitung von Prozess- und/oder Industrieabwässern wird ein Abwasser in einem kontinuierlichen Verfahren mittels eines erfindungsgemäßen Verdampfers eingedampft. Insbesondere wird mittels eines Verdampfers ein Spaltöl in einem kontinuierlichen Prozess entwässert wird.

Schließlich wird die Aufgabe gelöst durch eine Verwendung eines Verdampfers zur Entwässerung eines Spaltöls in einem kontinuierlichen Prozess.

Der Verdampfer ist vorzugsweise nach einer Eindampfeinrichtung einer Vorrichtung zur Aufbereitung von Prozess- und/oder Industrieabwässern angeordnet und übernimmt das dort ablaufende Abwasser-Konzentrat, welches auch als Spaltöl bezeichnet wird. Das dem Verdampfer zugeführte Abwasser weist daher in der Regel einen Wasseranteil von ca. 50 % auf. Es ist jedoch auch denkbar, ein Abwasser mit einem höheren Wasseranteil dem Verdampfer zuzuführen. Im Zusammenhang mit der Erfindung werden sowohl ein Spaltöl oder Abwasser-Konzentrat als auch ein nicht vorbehandeltes Abwasser als Abwasser bezeichnet. In dem Verdampfer wird das zugeführte Abwasser zirkuliert und in einem kontinuierlichen Verfahren wird das Spaltöl weiter eingedampft. Das aus dem Verdampfer auslaufende Endprodukt enthält in vorteilhaften Ausgestaltungen nur noch in einem Wasseranteil von maximal 10 %. Ein über den Dampfablass abgehender Dampf wird in vorteilhaften Ausgestaltungen genutzt, beispielsweise zur Erwärmung des Abwassers und/oder zum Antrieb einer Turbine. Ein derartiger Verdampfer ist vorzugsweise an einem Einsatzort vor einem Transport des belasteten Abwassers eingesetzt. Dadurch kann vermieden werden, dass überflüssiges Wasser transportiert wird.

Die Heizeinrichtung ist in vorteilhaften Ausgestaltungen zerstörungsfrei lösbar in dem wenigstens einen Steigrohr gelagert. Die Heizeinrichtung umfasst in vorteilhaften Ausgestaltungen einen elektrisch beheizbaren Heizstab. Ein derartiger Heizstab ist auf schnelle und einfache Weise steuer- und/oder regelbar, um eine bestimmte Aufheizung des Abwassers zu erzielen. Eine in dem wenigstens einen Steigrohr angeordnete Oberfläche des Heizstabs ist in vorteilhaften Ausgestaltungen beschichtet, um eine Ablagerung von Abwasserrückständen auf dem Heizstab zu verhindern. Um dennoch auftretende Ablagerungen zu entfernen, ist es vorgesehen, die Heizeinrichtung von dem Verdampfer zu trennen und außerhalb des Steigrohrs zu reinigen und/oder Elemente der Heizeinrichtung zumindest teilweise zu ersetzen. Vorzugsweise weisen das wenigstens eine Steigrohr und/oder das wenigstens eine Fallrohr im Bodenbereich einen Ablassanschluss auf, über welchen eine Entleerung des Verdampfers für einen Austausch und/oder eine Reinigung der Heizeinrichtung möglich ist.

Ein Zulauf und ein Ablauf für das Ausgangsprodukt bzw. das Endprodukt sind an geeigneter Stelle, beispielsweise im Bereich der Verbindungsstücke vorgesehen.

In einer vorteilhaften Ausgestaltung ist ein Zulauf für das Abwasser in einem Bodenbereich des wenigstens einen Steigrohrs angeordnet. Dadurch wird das zulaufende Abwasser direkt dem Steigrohr für eine Erhitzung zugeführt, wobei die gesamte Strecke des Heizrohrs zur Erhitzung nutzbar ist.

In einer weiteren Ausgestaltung ist vorgesehen, dass ein Ablauf für konzentriertes Abwasser in einem oberen Bereich des wenigstens einen Fallrohrs angeordnet ist. In dem Fallrohr stellt sich eine Schichtung des Abwassers aufgrund von Dichteverhältnissen ein, wobei ein in dem Abwasser vorhandenes Öl üblicherweise eine geringere Dichte als ein in dem Abwasser vorhandenes Wasser hat und daher sich im oberen Bereich ein konzentriertes Abwasser ansammelt, welches über den Ablauf abfließt. Das über den Ablauf abfließende Produkt ist je nach Ausgangsstoff stofflich in bestimmten Einsatzbereich wieder verwertbar. Beispielsweise ist in einer Ausgestaltung eine Wiederverwertung als Kühlschmiermittel für bestimmte Einsatzfälle vorgesehen. In anderen Ausgestaltungen dient das abfließende Produkt als Ausgangsstoff für weitere neue Produkte.

In einer weiteren Ausgestaltung ist in dem wenigstens einen Steigrohr und/oder in dem wenigstens einen Fallrohr ein Temperatur-Sensor angeordnet. Der Temperatur-Sensor dient einer Messung der Temperatur des Abwassers an mindestens einer Stelle der Abwasser-Zirkulation. Dadurch ist eine Überwachung des Verdampfers möglich. In vorteilhaften Ausgestaltungen ist vorgesehen, dass die Heizeinrichtung und/oder ein Zulauf entsprechende einer erfassten Temperatur gesteuert und/oder geregelt wird.

In noch einer weiteren Ausgestaltung ist in dem wenigstens einen Fallrohr ein Füllstands-Sensor angeordnet ist. Der Füllstands-Sensor dient in vorteilhaften Ausgestaltungen ebenfalls einer Überwachung. Dabei ist in einer Ausgestaltung vorgesehen, dass die Heizeinrichtung abgeschaltet wird, wenn ein Mindest-Füllstand unterschritten wird, um eine Überhitzung des Verdampfers und/oder einen "trockenen Betrieb" der Heizeinrichtung zu vermeiden.

In weiteren vorteilhaften Ausgestaltung weist der Dampfauslass einen Kondensierabschnitt für eine Abscheidung von Restflüssigkeit auf. Der Kondensierabschnitt ist in einer vorteilhaften Ausgestaltung der Erfindung durch eine Erweiterung eines Kanalabschnitts des Dampfauslasses realisiert. Aufgrund der Erweiterung kommt es zu einer Verlangsamung der Strömung. Dies führt dazu, dass mitgeführte Flüssigkeit abgeschieden wird. An einer Wandung des Kondensierabschnitts ist ein Auslass vorgesehen, über welchen eine in dem Kondensierabschnitt vorhandene Flüssigkeit abgeführt werden kann. Im Anschluss an den Kondensierabschnitt mit verbreitertem Querschnitt ist eine Verjüngung vorgesehen, wobei ein Strömungsquerschnitt des Dampfauslasses stromabwärts der Verjüngung vorzugsweise geringer ist als ein Strömungsquerschnitt stromaufwärts des Kondensierabschnitts.

In einer weiteren vorteilhaften Ausgestaltung ist vorgesehen, dass ein Strömungsdurchmesser des ersten Verbindungselements größer ist als ein Strömungsdurchmesser des Zulaufs. In einer Ausgestaltung sind der Zulauf und das erste Verbindungselement in etwa auf einer Höhe angeordnet. In vorteilhaften Ausgestaltungen ist der Zulauf oberhalb des ersten Verbindungselements angeordnet. Dadurch ist sichergestellt, dass bereits in dem Verdampfer vorhandenes Abwasser zirkuliert wird und das zulaufende Abwasser dem Steigrohr zugeführt wird. Die Anordnung ist dabei in vorteilhaften Ausgestaltungen derart gewählt, dass ein unterer Rand des Zulaufs in etwa auf Höhe eines oberen Rands des Verbindungselements angeordnet ist.

Weitere Vorteile der Erfindung ergeben sich aus den Unteransprüchen und aus der nachfolgenden Beschreibung eines Ausführungsbeispiels der Erfindung, das in den Zeichnungen schematisch dargestellt ist. Für gleiche oder ähnliche Bauteile werden in den Zeichnungen einheitliche Bezugszeichen verwendet.

In den Zeichnungen zeigen schematisch:
- Fig. 1:: eine Seitenansicht eines Verdampfers,
- Fig. 2:: eine perspektivische Darstellung des Verdampfers und
- Fig. 3:: einen Schaltschrank für einen Verdampfer gemäß Fig. 1.

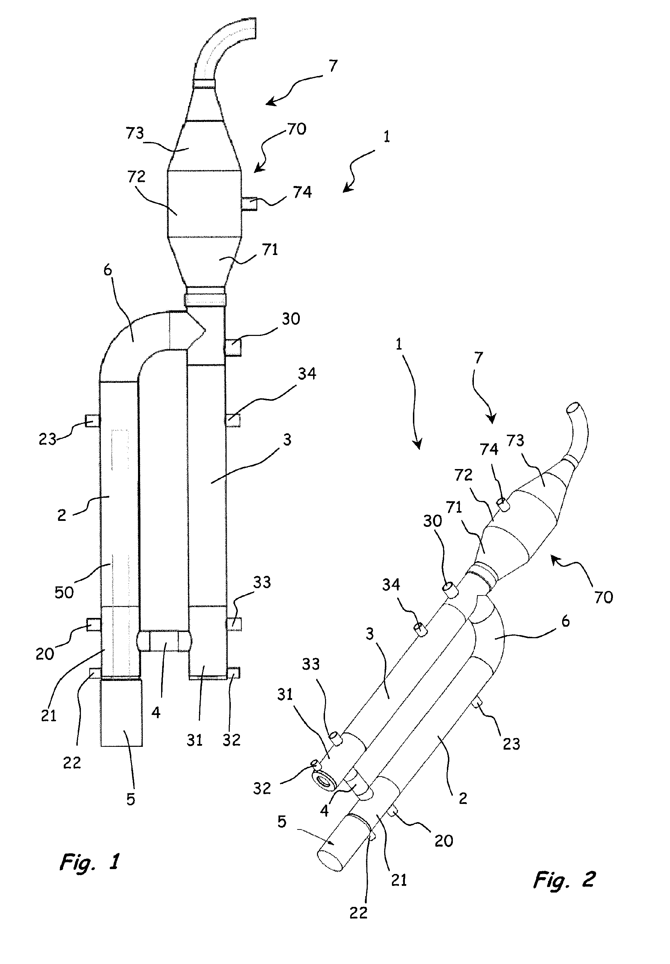

Fig. 1 und 2 zeigen schematisch einen Verdampfer 1 für Prozess- und/oder Industrieabwässer mit einem Steigrohr 2 und einem Fallrohr 3 in einer Seitenansicht bzw. einer perspektivischen Darstellung. Das Steigrohr 2 ist mit dem Fallrohr 3 über ein erstes, als Verbindungsrohr ausgebildetes Verbindungselement 4 in einem Bodenbereich kommuniziert. An dem Steigrohr 2 ist weiter eine Heizeinrichtung 5 mit einem sich in dem Steigrohr 2 erstreckenden, schematisch in Fig. 1 dargestellten Heizstab 50 vorgesehen. Mittels der Heizeinrichtung 5 ist ein in dem Steigrohr 2 vorhandenes Abwasser auf eine Temperatur oberhalb der Siedetemperatur von Wasser erhitzbar. Das Steigrohr 2 ist zudem mit dem Fallrohr 3 in einem oberen Endbereich über ein zweites Verbindungselement 6 verbunden. Das Verbindungselement 6 ist mit einem Dampfauslass 7 kommuniziert, sodass aufgrund der Erwärmung aus dem Abwasser ausgeschiedener Dampf abführbar ist. Über das Verbindungselement 6 ist weiter nicht verdampftes Abwasser für eine Zirkulation zu dem Fallrohr 3 rückführbar.

In dem dargestellten Ausführungsbeispiel ist ein Zulauf 20 für das Abwasser in einem Bodenbereich des Steigrohrs 2 angeordnet. Unterhalb des Zulaufs 20 ist ein Abzweig 21 des Steigrohrs 2 vorgesehen, in welchem sich eventuell in dem zugeführten Abwasser vorhandene, schwere Feststoffe ablagern können. Zur Reinigung des Steigrohrs 2 ist ein Anschluss 22 für einen Kugelhahn oder dergleichen vorgesehen. Der Zulauf 20 ist etwas oberhalb des ersten Verbindungselements 4 angeordnet. In anderen Ausgestaltungen sind der Zulauf 20 und das erste Verbindungselement 4 in etwa auf einer Höhe angeordnet. Ein Strömungsdurchmesser des Verbindungselements 4 ist größer als ein Strömungsdurchmesser des Zulaufs 20. Der Strömungsdurchmesser des Verbindungselements 4, der Strömungsdurchmesser des Zulaufs 20 und ein Strömungsdurchmesser des Steigrohrs 2 sind derart aufeinander abgestimmt, dass bei einer Beheizung des Abwassers in dem Steigrohr 2 eine Durchströmung des Steigrohrs 2 mit frisch über den Zulauf 20 zugeführtem Abwasser und bereits zirkulierten und über das Verbindungselement 4 erneut zugeführtem Abwasser sichergestellt ist.

Aus dem im Steigrohr 2 erhitzten Abwasser ausgeschiedener Dampf ist über den Dampfauslass 7 abführbar. Der Dampfauslass 7 ist in dem dargestellten Ausführungsbeispiel in Verlängerung des Fallrohrs 3 angeordnet. In anderen Ausgestaltungen ist der Dampfauslass 7 in Verlängerung des Steigrohrs 2 und/oder zwischen Steigrohr 2 und Fallrohr 3 an dem Verbindungselement 6 vorgesehen.

Nicht im Steigrohr 2 verdampftes Abwasser wird über das zweite Verbindungselement 6 für eine Zirkulation zu dem Fallrohr 3 geführt. Das Verbindungselement 6 ist in dem dargestellten Ausführungsbeispiel als Krümmer für eine gute Strömungsführung gestaltet.

Das Abwasser ist beispielsweise eine Öl-Wasser-Dispersion. In dem Fallrohr 3 sammelt sich das Abwasser entsprechend herrschender Dichteverhältnisse einzelner Bestandteile des Abwassers an. Ein Ablauf 30 für konzentriertes Abwasser ist in einem oberen Bereich des Fallrohrs 3 angeordnet. Der Ablauf 3 funktioniert nach dem Überlaufprinzip, wobei wenn die Füllhöhe in dem Fallrohr 3 den Ablauf 30 erreicht, konzentriertes Abwasser abläuft. Der Ablauf 30 ist dabei in etwa auf Höhe eines unteren Rands des Verbindungselements 6 angeordnet.

Unterhalb des Verbindungselements 4 zu dem Steigrohr 2 ist an dem Fallrohr 3 ebenfalls ein Abzweig 31 vorgesehen, in welchem sich eventuell in dem zugeführten Abwasser vorhandene, schwere Feststoffe ablagern können. Zur Reinigung des Fallrohrs 3 ist ein Anschluss 32 für einen Kugelhahn oder dergleichen vorgesehen.

Der Dampfauslass 7 weist einen Kondensierabschnitt 70 für eine Abscheidung von in dem Dampf vorhandener Restflüssigkeit auf. Der Kondensierabschnitt 70 umfasst in einem Eingangsbereich einen sich diffusorartig mit einem Öffnungswinkel erweiterten Abschnitt 71 und einen Bereich mit konstantem Querschnitt 72. Im Anschluss an den Kondensierabschnitt 70 ist eine düsenartige Verjüngung 73 vorgesehen, wobei ein Strömungsquerschnitt des Dampfauslasses 7 stromabwärts der düsenartigen Verjüngung 73 vorzugsweise geringer ist als ein Strömungsquerschnitt stromaufwärts des Kondensierabschnitts 70. An einer Wandung des Kondensierabschnitts 70 ist ein Auslass 74 vorgesehen, über welchen eine in dem Kondensierabschnitt 70 vorhandene Flüssigkeit, beispielsweise aufgrund einer Verstopfung des Ablaufs 30, abgeführt werden kann. Durch die Gestaltung des Kondensierabschnitts 70 kommt es zu einer Entspannung des zugeführten Dampfs, wodurch mitgeführte Partikel, insbesondere mitgeführte Öl-Partikel verflüssigt werden. Aufgrund der Anordnung des Kondensierabschnitts 70 oberhalb des Fallrohrs 3 kann die in dem Kondensierabschnitt 70 abgeschiedene Flüssigkeit in das Fallrohr 3 zurücktropfen.

Die Heizeinrichtung 5 wird derart betrieben, dass das Abwasser auf eine Temperatur erwärmt wird, welche oberhalb der Siedetemperatur von Wasser, jedoch unterhalb einer Siedetemperatur von in dem Abwasser vorhandenen Öl liegt. Beispielsweise haben sich Temperaturen zwischen 100° und ca. 150°C als vorteilhaft erwiesen. Ein Überhitzen des Verdampfers kann zu einem Überschreiten der Siedetemperatur eines in dem Abwasser befindlichen Öls führen, wodurch Öl über den Dampfauslass 7 abgeführt wird.

Für eine automatische Überwachung und Regelung des Verdampfers 1 ist in dem dargestellten Ausführungsbeispiel an dem Steigrohr 2 und dem Fallrohr 3 jeweils ein Anschluss 23, 33 für einen nicht dargestellten Temperatur-Sensor vorgesehen. Als Temperatur-Sensoren sind in einer Ausgestaltung Pt100-Sensoren eingesetzt. Mittels eines an dem Anschluss 23 des Steigrohrs 2 vorgesehenen Sensors ist dabei ein Erreichen einer Siedetemperatur überwachbar. Über einen zweiten, an dem Anschluss 33 im Bodenbereich des Fallrohrs 3 vorgesehenen Sensor ist dagegen eine Überwachung zur Vermeidung einer Überhitzung möglich.

An dem Fallrohr 3 ist weiter ein Anschluss 34 für einen nicht dargestellten Füllstands-Sensor vorgesehen. Der Füllstands-Sensor dient ebenfalls einer Überwachung. Der Füllstands-Sensor ist beispielsweise als Schalter gestaltet, wobei die Heizeinrichtung 5 abgeschaltet wird, wenn ein Mindest-Füllstand unterschritten wird, d.h. der Füllstand in dem Fallrohr 3 unter eine Höhe fällt, an welcher der Füllstands-Sensor angebracht ist.

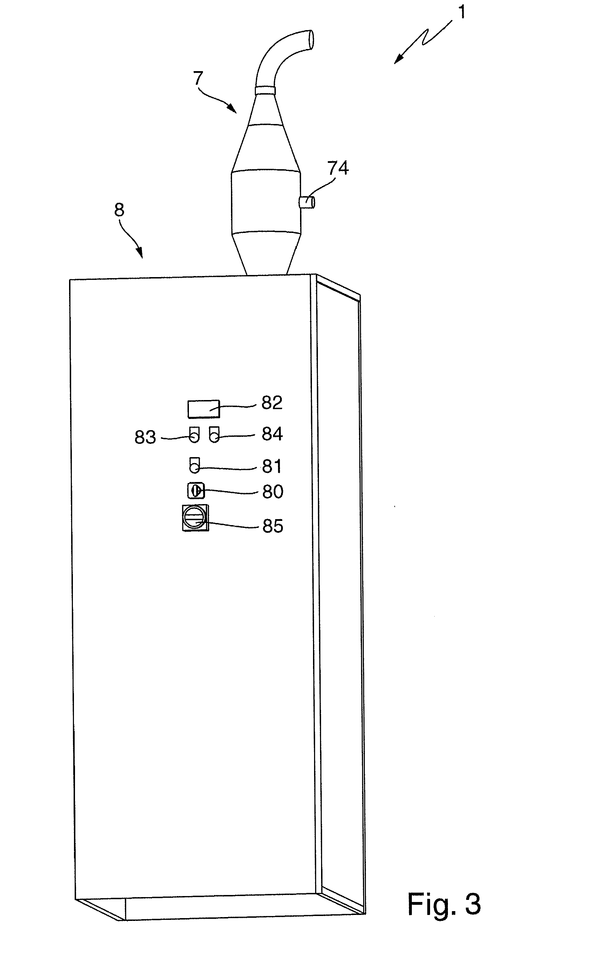

Fig. 3 zeigt schematisch einen Schaltschrank 8 für den nur teilweise sichtbaren Verdampfer 1 gemäß Fig. 1 und 2. Der Verdampfer 1 ist größtenteils in dem Schaltschrank 8 angeordnet, wobei der Schaltschrank 8 zu diesem Zweck Ausnehmungen für nicht dargestellte Leitungsanschlüsse aufweist.

An dem Schaltschrank 8 ist ein Ein-/Ausschalter 80 zur Zu- bzw. Abschaltung der Heizeinrichtung 5 gemäß Fig. 1 vorgesehen. Sofern die Heizeinrichtung 5, abgeschaltet ist, wird über den Ablauf 30 das über den Zulauf 20 zugeführte Abwasser unverändert abgeführt. Erst durch Zuschaltung der Heizeinrichtung 5 erfolgt eine Eindampfung des Abwassers.

Über eine Kontrollleuchte 81, welche in vorteilhaften Ausgestaltungen bei einem störungsfreien Betrieb grün leuchtet ist, und eine Anzeige 82 ist ein Ist-Zustand optisch überwachbar. Die Anzeige 82 dient dabei beispielsweise der Anzeige einer Ist-Temperatur. Alternativ oder zusätzlich sind Abweichungen einer Ist-Temperatur von einer SollTemperatur anzeigbar. Die angezeigte Ist-Temperatur wird vorzugsweise über einen an dem Anschluss 23 gemäß Fig. 1 vorgesehenen Temperatur-Sensor ermittelt.

Zusätzlich sind bei dem dargestellten Ausführungsbeispiel Schutzfunktionen vorgesehen. Hierzu sind in dem dargestellten Ausführungsbeispiel zwei Kontrollleuchten 83, 84 vorgesehen, welche in vorteilhaften Ausgestaltungen bei einem gestörten Betrieb rot leuchten. Eine erste Kontrollleuchte 83 dient dabei der Anzeige einer Störung des Füllstands und eine zweite Kontrollleuchte 84 einer Anzeige einer Überhitzung. Als weitere Sicherheitsfunktion ist ein Notaus-Schalter 85 vorgesehen.

Der Verdampfer 1 gemäß Fig. 1, 2 und 3 ist vorzugsweise in einer nicht dargestellten Vorrichtung zur Aufbereitung von Prozess- und/oder Industrieabwässern angeordnet, wobei der Verdampfer 1 einer ersten Eindampfeinrichtung, mittels welcher ein Abwasser zur Gewinnung von Spaltöl eindampfbar ist, nachgeordnet ist und zur Entwässerung des bereits über die Eindampfeinrichtung eingedampften Spaltöls dient.

## Patentansprüche

1. Verdampfer für Prozess- und/oder Industrieabwässer mit mindestens einem Steigrohr (2) und mindestens einem Fallrohr (3), wobei das wenigstens eine Steigrohr (2) mit dem wenigstens einen Fallrohr (3) über ein erstes Verbindungselement (4) in einem Bodenbereich kommuniziert ist, und das wenigstens eine Steigrohr (2) mit dem wenigstens einen Fallrohr (3) über ein zweites Verbindungselement (6) verbunden ist, welches mit einem Dampfauslass (7) kommuniziert ist, sodass aus dem Abwasser ausgeschiedener Dampf abführbar ist, und nicht verdampftes Abwasser über das zweite Verbindungselement (6) für eine Zirkulation zu dem Fallrohr (3) führbar ist,
**dadurch gekennzeichnet, dass**
eine Heizeinrichtung (5) in dem Steigrohr (2) angeordnet ist, mit welcher ein in dem Steigrohr (2) vorhandenes Abwasser auf eine Temperatur oberhalb der Siedetemperatur von Wasser erhitzbar ist.

2. Verdampfer nach Anspruch 1, **dadurch gekennzeichnet, dass** die Heizeinrichtung (5) zerstörungsfrei lösbar in dem wenigstens einen Steigrohr (2) gelagert ist.

3. Verdampfer nach Anspruch 1 oder 2, **dadurch gekennzeichnet, dass** die Heizeinrichtung (5) einen elektrisch beheizbaren Heizstab umfasst.

4. Verdampfer nach Anspruch 1, 2 oder 3, **dadurch gekennzeichnet, dass** ein Zulauf (20) für das Abwasser in einem Bodenbereich des wenigstens einen Steigrohrs (2) angeordnet ist.

5. Verdampfer nach einem der Ansprüche 1 bis 4, **dadurch gekennzeichnet, dass** ein Ablauf (30) für konzentriertes Abwasser in einem oberen Bereich des wenigstens einen Fallrohrs (3) angeordnet ist.

6. Verdampfer nach einem der Ansprüche 1 bis 5, **dadurch gekennzeichnet, dass** in dem wenigstens einen Steigrohr (2) und/oder in dem wenigstens einen Fallrohr (3) ein Temperatur-Sensor angeordnet ist.

7. Verdampfer nach einem der Ansprüche 1 bis 6, **dadurch gekennzeichnet, dass** in dem wenigstens einen Fallrohr (3) ein Füllstands-Sensor angeordnet ist.

8. Verdampfer nach einem der Ansprüche 1 bis 7, **dadurch gekennzeichnet, dass** der Dampfauslass (7) einen Kondensierabschnitt (70) für eine Abscheidung von Restflüssigkeit aufweist.

9. Verdampfer nach einem der Ansprüche 1 bis 8, **dadurch gekennzeichnet, dass** ein Strömungsdurchmesser des ersten Verbindungselements (4) größer ist als ein Strömungsdurchmesser des Zulaufs (20).

10. Verdampfer nach einem der Ansprüche 1 bis 9, **dadurch gekennzeichnet, dass** der Zulauf (20) oberhalb des ersten Verbindungselements (4) angeordnet ist.

11. Vorrichtung zur Aufbereitung von Prozess- und/oder Industrieabwässern mit einer ersten Eindampfeinrichtung, mittels welcher ein Abwasser zur Gewinnung von Spaltöl eindampfbar ist, und einem Verdampfer (1) nach einem der Ansprüche 1 bis 10 zur Entwässerung des Spaltöls.

12. Verfahren zur Aufbereitung von Prozess- und/oder Industrieabwässern, wobei mittels eines Verdampfers (1) nach einem der Ansprüche 1 bis 10 ein Abwasser, insbesondere ein Spaltöl, in einem kontinuierlichen Prozess entwässert wird.

13. Verwendung eines Verdampfers (1) nach einem der Ansprüche 1 bis 10 zur Entwässerung eines Spaltöls in einem kontinuierlichen Prozess.
